# EUROPEAN PATENT SPECIFICATION

(11) **EP 2 256 992 B1**
(45) Date of publication and mention of the grant of the patent: **18.04.2018**
(21) Application number: 09290401.0
(22) Date of filing: 29.05.2009
(51) Int. Cl.: H04L 12/40, H04L 12/413, H04L 25/02

(54) **Transmission of field bus signals over an ethernet medium**
Übertragung von Feldbussignalen über ein Ethernet-Medium
Transmission de signaux de bus de champ sur un support Ethernet

(43) Date of publication of application: 01.12.2010
(73) Proprietor: Alcatel Lucent, 91620 Nozay (FR)
(72) Inventor: Thomas, Alexander, 30539 Hannover (DE)
(74) Representative: Wetzel, Emmanuelle

(56) References cited:
- EP-A- 1 608 119
- WO-A-02/39676
- FR-A- 2 806 571
- US-A- 5 587 692

## Description

### Background of the Invention

The invention relates to a method for transmitting field bus signals between at least two field bus stations of a field bus system, in particular of the Process Field Bus, Profibus, type. The invention also relates to a field bus system, in particular of the Process Field Bus, Profibus, type, comprising at least two field bus stations, to a wireless communications network having at least one such field bus system, and to a balun for use in such a field bus system.

Profibus signals are used in automation and monitoring systems. For transmitting the Profibus signals between field bus stations using the Profibus standard, these field bus stations are connected via a Profibus medium, i.e. cabling and connectors, as defined in the Profibus standard(s).

However, the costs of the cabling and connectors according to the Profibus standard are considerable. Moreover, for system connections, an additional Profibus cabling has to be installed in the application area as well. Furthermore, the cabling used for these purposes is quite complex to install due to inflexible cable and screw connectors of the Profibus cabling equipment. Thus, commissioning work can take a huge effort and cause huge practical problems when a Profibus system has to be installed in a large number of locations.

Document US5587692 A, relates to impedance matching of two twisted pair cables having different impedance. For this purpose, a punch down block / balun is provided which comprises four forked pins / leads for connecting together a first and a second twisted pair line.

### Object of the Invention

It is an object of the invention to provide a simple and cost-effective way of connecting different field bus, in particular Profibus stations for transmitting field bus signals.

### Summary of the Invention

This object is achieved by a method and field bus system according to claims 1 and 7. The inventor proposes to connect field bus stations which are adapted to transmit field bus signals over a field bus medium with a first impedance, in particular a Profibus transmission medium, by using an Ethernet transmission medium with an impedance which is different from the impedance provided by a Profibus or other field bus medium. The advantage of using Ethernet media for the connection as compared to other field bus systems is that Ethernet network technology is more common, thus available with reduced expenditure and easier to handle during the installation. In particular, the cabling has a smaller diameter as compared to e.g. Profibus cabling, making it more flexible such that a smaller bending radius can be achieved during commissioning of the field bus system. Also, the installation of the Ethernet cabling is more efficient and faster, for instance due to the use of snap-in connectors (e.g. of the RJ-45 type) provided by the Ethernet technology instead of the screw connectors of the Profibus technology.

As the Ethernet transmission medium / cabling being used for the connection has an impedance which is not matched to the impedance of the field bus stations, reflections, dispersion etc. of the signals transmitted over the Ethernet cabling may occur, these possible outcome of these types of interferences being a network malfunction. In some applications, however, a reduced reliability of the connection due to the transmission of unmatched signals may be tolerable, such that provisioning of impedance matching elements (so-called baluns, see below) may be dispensed with.

In one variant, a balun is arranged in at least one connection point of the field bus system for performing an impedance matching between the first and the second impedance. Typically, at connection points between the Ethernet equipment / medium and the Profibus equipment / medium, impedance matching elements (baluns) are provided for avoiding a degradation of the transmission reliability due to the effects described above, allowing the transmitting of signals over the whole connection of the matched network without malfunctions.

The baluns may be integrated in the field bus stations / units or in an external adapter arranged between the field bus stations. Baluns are impedance matching elements (working with different principles commonly known in the art). In the present case, the baluns are adapted for matching the impedance from the common Profibus impedance of typically 150 Ω (e.g. signals from a Profibus transceiver) to the impedance of the Ethernet medium (typically 100 Ω) and vice versa.

In a further variant, the field bus signals are transmitted over at least one of an Ethernet cable, in particular of the CAT5e or CAT6 type, and an Ethernet connector, in particular of the RJ45 type. The person skilled in the art will appreciate that transmissions using other types of Ethernet cables / connectors, e.g. of the CAT7 or CAT5 type, are possible as well.

In another variant, the field bus signals are transmitted over an Ethernet network. In this case, the Ethernet medium (including cabling / connectors) is an Ethernet network, i.e. a computer network according to Ethernet standard such as a Local Area Network (LAN). Thus, more than one connection can be provided between the field bus stations, the topology of the network allowing the field bus signals between two or more field bus stations to be transmitted over different physical connections.

In a further variant, at least one of the field bus stations is chosen from the group consisting of: a master station and a slave station of the field bus system. One of the field bus stations may serve as a master station, being typically arranged at the head end of a tree-like structure which connects the master station to a plurality of slave stations, the latter being possibly also interconnected. In this case, transmission of the field bus signals may be provided between two or more master stations, between two or more slave stations and/or between at least one master station and at least one slave station.

When using the combined Profibus / Ethernet field bus system described above for the monitoring of a communications system, in particular being adapted for the transmission of RF signals, the field bus stations may be devised as communications units adapted to transfer RF signals over cable connections, the Profibus / Ethernet system being used for monitoring the performance of the communications units. In particular, the slave stations may be devised e.g. as bi-directional amplifiers of an RF signal, the slave stations being connected to a common master station using Profibus connections via an Ethernet medium.

A second aspect of the invention is implemented in a field bus system of the type described in the introduction, the field bus stations being adapted to transmit field bus signals over a field bus medium having a first impedance, and at least part of the connection between the field bus stations for transmitting the field bus signals is implemented by an Ethernet medium having a second impedance being different from the first impedance. At connection points between the first and the second medium, typically an adapter is provided for performing conversion between the different types of cabling which are utilized as a first / second transmission medium.

In one embodiment, the field bus system further comprises at least one balun arranged at a connection point of the field bus system, the balun being adapted for performing impedance matching between the first and the second impedance. As described above, the connection points are arranged between the medium / equipment of the field bus system with the first impedance and the medium / equipment with the second impedance.

In a further embodiment, the Ethernet medium comprises at least one of an Ethernet cable, in particular of the CAT5e or CAT6 type, and an Ethernet connector, in particular of the RJ45 type, the latter being a snap-in connector, facilitating the deployment of the field bus system.

In another embodiment, the Ethernet medium / equipment is an Ethernet network. Using an Ethernet network for connecting the field bus stations is a highly flexible solution for transmitting signals. It will be understood that the solution described herein may be applied to existing Ethernet networks, i.e. to Ethernet networks which have already been installed, without having to modify these networks.

In one embodiment, one of the field bus stations is a master station, being connected to at least one field bus station serving as a slave station. In this case, transmission of signals over Ethernet equipment can be performed between the master and the slave stations. It will be understood that alternatively or in addition, by deploying appropriate equipment, such transmissions may also be performed between two or more master stations and between two or more slave stations, respectively.

When using the field bus system for the monitoring of a communications system, at least one of the field bus stations, in particular a slave station, may be devised as a RF communication unit, in particular as an RF amplifier. The person skilled in the art will appreciate that the use of the field bus system as described herein is by no means restricted to the monitoring of a communications system, but may be used for monitoring / automation or for other purposes in a variety of technical fields.

A further aspect of the invention is implemented in a wireless communications network comprising at least one field bus system as described above. The field bus system may be used for monitoring the performance of the field bus stations being devised e.g. as components used for transporting RF signals, e.g. RF amplifier modules and the like.

Another aspect is implemented in a balun for use in a field bus system as described above, being adapted to perform impedance matching between a Profibus transmission medium having a first impedance and an Ethernet transmission medium having a second impedance. The balun may e.g. be integrated into an adapter which is used for providing a link between two connectors being devised for the first / second type of cabling, respectively.

Further features and advantages are stated in the following description of exemplary embodiments, with reference to the figures of the drawing, which shows significant details, and are defined by the claims. The individual features can be implemented individually by themselves, or several of them can be implemented in any desired combination.

### Brief Description of the Drawings

Exemplary embodiments are shown in the diagrammatic drawing and are explained in the description below. The following are shown:
- **Fig. 1**: shows a schematic diagram of an embodiment of a field bus system with two Profibus transceivers being connected over an Ethernet medium,
- **Fig. 2**: shows a schematic diagram of a further embodiment of a field bus system having two baluns, and
- Fig. 3: shows a schematic diagram of several components of an embodiment of a wireless communications network, a field bus system being used for monitoring some of the components of the wireless communications network.

### Detailed Description of Preferred Embodiments

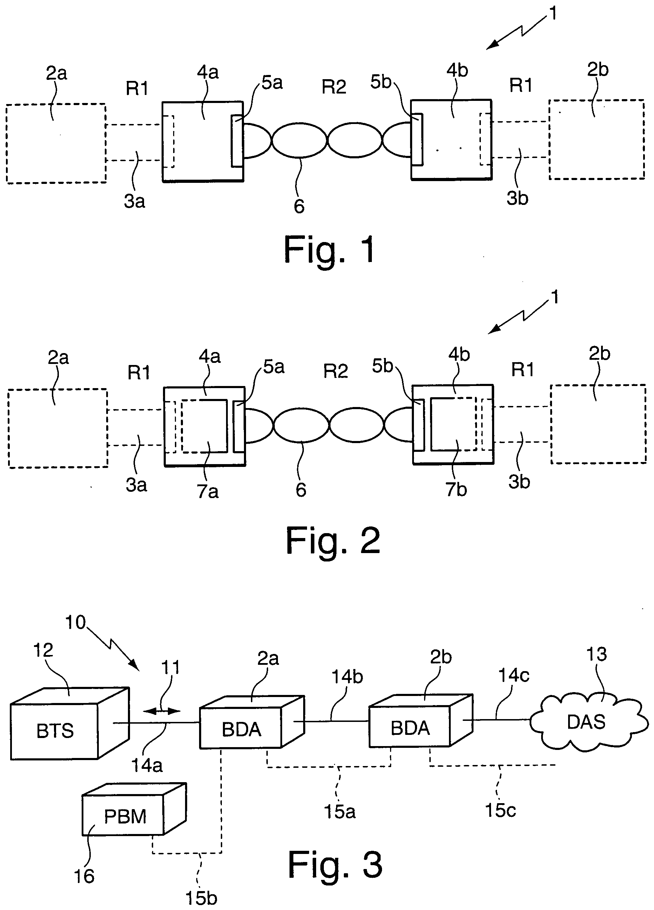

**Fig. 1** shows a detail of a field bus system **1** with two field bus stations **2a, 2b** according to the Profibus standard, being devised as Profibus transceivers in the present example. A respective Profibus medium **3a, 3b** in the form of a cable connector arranged at the Profibus stations 2a, 2b is adapted to transmit Profibus signals originating from the Profibus stations 2a, 2b with a first impedance of **R1** = 150 Ω.

Each of the cable connectors 3a, 3b of the Profibus is connected to an adapter **4a, 4b** forming a connection point to a respective Ethernet connector **5a, 5b,** e.g. of the RJ45 (plug-in) type. The Ethernet connectors 5a, 5b are arranged at two opposite ends of an Ethernet (coaxial) cable **6** being e.g. of the CAT5e or CAT6 type and having a second impedance **R2** of 100 Ω. The adapter 4a, 4b links the cabling equipment (connector 4a, 4b) of the Profibus standard (represented by dashed lines in Fig. 1) to the cabling 6 / connector 5a, 5b of the Ethernet standard (represented by drawn-out lines in Fig. 1) without impedance matching.

Although the adapters 4a, 4b are required, the use of an Ethernet medium for connecting the Profibus stations 2a, 2b is preferred over a connection using a Profibus medium, as Ethernet equipment is widely available and thus less expensive than Profibus equipment. Moreover, the Ethernet medium (cable 6 and connectors 5a, 5b) is easier to handle during installation of the field bus system 1. In particular, the cabling has a smaller diameter as compared to e.g. Profibus cabling, making it more flexible such that a smaller bending radius can be achieved during commissioning of the field bus system 1. Also, the installation of the cabling is more efficient and faster, e.g. due to the usage of snap-in connectors (e.g. RJ-45) provided by the Ethernet technology instead of the screw connectors of the Profibus technology.

When using adapters 4a, 4b having an unmatched impedance, reflections, dispersion etc. of the signals transmitted over the Ethernet medium 5a, 5b, 6 may occur, a malfunction of the field bus system 1 being a possible result of these types of interferences. In some applications, however, a reduced reliability of the connection between the Profibus stations 2a, 2b may be tolerable.

For avoiding a degradation of the reliability of the transmission due to the effects described above, a balun **7a, 7b** is provided in the adapters 4a, 4b of the field bus system 1 represented in **Fig. 2****.** The baluns 7a, 7b are impedance matching elements (comprising e.g. resistors, capacitors, inductors and/or transmission lines of appropriate length) which match the impedance from the common Profibus impedance of typically 150 Ω (e.g. signals from a Profibus transceiver) to the impedance of the Ethernet medium (typically 100 Ω) and vice versa. It will be understood that instead of integrating the baluns 7a, 7b in an external adapter 4a, 4b as shown in Fig. 2, the baluns may be integrated into the field bus stations 2a, 2b. In this case, the entire connection between the field bus stations 2a, 2b may be deployed as an Ethernet medium.

It will be understood that the single Ethernet cable 6 may be replaced by an Ethernet network (not shown), thus allowing the transmission of signals between the Profibus stations over a plurality of different physical connections. Typically, this is only possible if no active units (switches etc.) are present in the physical connections between the Profibus stations. Also, the Profibus connectors 3a, 3b may be replaced by Profibus cabling, if establishing part of the cable connection using Profibus equipment is desired.

A field bus system 1 of the type shown in Fig. 1 or Fig. 2 may be used e.g. for monitoring of a wireless communications network **10,** a portion of which being represented in **Fig. 3****.** A base transceiver station **12** of the network 10 is used for transmitting / receiving a RF signal **11** comprising user data to / from a distributed antenna system **13** via RF connections **14a** to **14c,** the latter being linked via two cascaded communication units in the form of Bi-directional amplifiers 2a, 2b.

The Bi-directional amplifiers 2a, 2b serve as Profibus stations, being connected via a Profibus connection **15a** which is implemented using an Ethernet medium in the way described above with reference to Figs. 1,2. Moreover, a Profibus master station **16** is provided in the wireless communications system 10 of Fig. 3, serving as a master station and being connected to the first amplifier 2a via a further Profibus connection **15b,** the latter being devised in the same way as the Profibus connection 15a.

The Profibus master station 16 may be connected to further communication units (not shown) along the RF path 14a to 14c via further Profibus connections **15c** etc. Thus, in the communications system 10 of Fig. 3, the Profibus master 16 together with the Profibus slaves 2a, 2b and the Profibus connections 15a to 15c are forming a field bus system. It will be understood that the Profibus master station 16 may be connected to RF paths of further Base Transceiver Stations or to any other communications equipment devised in the communications system 10. In any case, the Profibus master 16 serves for remote monitoring of the performance of the communications equipment (e.g. 2a, 2b) of the communications system 10.

The person skilled in the art will appreciate that the use of Profibus connections over an Ethernet medium is not limited to the field of communication systems, but may be advantageously applied in a variety of other systems as well. Moreover, it will be understood that transmission media for field bus systems other than the Profibus system may also be advantageously replaced by an Ethernet medium, as the latter is cost-effective and allows for an easy handling, especially during installation of the field bus system.

The above description of preferred embodiments has been given by way of example. From the disclosure given, those skilled in the art will not only understand the present invention and its attendant advantages, but will also find apparent various changes and modifications to the structures and methods disclosed. The applicant seeks, therefore, to cover all such changes and modifications as defined by the appended claims, and equivalents thereof.

## Claims

1. Method for transmitting field bus signals between at least two field bus stations (2a, 2b, 16) of a field bus system (1) of the Process Field Bus, Profibus, type, wherein
the field bus stations (2a, 2b, 16) are adapted to transmit the field bus signals over a Profibus medium (3a, 3b) having a first impedance (R1),
wherein
at least part of the transmission of the field bus signals is performed over an Ethernet transmission medium (5a, 5b, 6) having a second impedance (R2) being different from the first impedance (R1),
and the field bus signals are transmitted over a snap-in Ethernet connector (5a, 5b).

2. Method according to claim 1, wherein in at least one connection point (4a, 4b) of the field bus system (1), a balun (7a, 7b) is arranged for performing impedance matching between the first and the second impedance (R1, R2).

3. Method according to claim 1, wherein the field bus signals are transmitted over an Ethernet cable (6).

4. Method according to claim 1, wherein the field bus signals are transmitted over an Ethernet network.

5. Method according to claim 1, wherein at least one of the field bus stations (2a, 2b) is chosen from the group consisting of: a master station (16) and a slave station (2a, 2b) of the field bus system (1).

6. Method according to claim 1, wherein at least one field bus station (2a, 2b) is adapted to perform amplification of an RF signal (11).

7. Field bus system (1) according to the Process Field Bus, Profibus, type, comprising at least two field bus stations (2a, 2b, 16) which are adapted to transmit field bus signals over a Profibus medium (3a, 3b) having a first impedance (R1),
wherein at least part of the connection (15a to 15c) between the field bus stations (2a, 2b, 16) for transmitting the field bus signals is implemented by an Ethernet medium (5a, 5b, 6) having a second impedance (R2) being different from the first impedance (R1), and wherein the Ethernet medium (5a, 5b, 6) comprises a snap-in Ethernet connector (5a, 5b).

8. Field bus system according to claim 7, further comprising at least one balun (7a, 7b) arranged at a connection point (4a, 4b) of the field bus system (1), the balun (7a, 7b) being adapted for performing impedance matching between the first and the second impedance (R1, R2).

9. Field bus system according to claim 7, wherein the Ethernet medium (5a, 5b, 6) comprises an Ethernet cable (6).

10. Field bus system according to claim 7, wherein the Ethernet medium is an Ethernet network.

11. Field bus system according to claim 7, wherein one of the field bus stations is a master station (16), being connected to at least one field bus station serving as a slave station (2a, 2b).

12. Field bus system (1) according to claim 7, wherein at least one of the field bus stations (2a, 2b) is a RF communications unit, in particular an RF amplifier.

13. Wireless communications network (10) comprising at least one field bus system according to claim 7.

## Patentansprüche

1. Verfahren zum Übertragen von Feldbussignalen zwischen mindestens zwei Feldbusstationen (2a, 2b, 16) eines Feldbussystems (1) des Prozessfeldbusses, Profibus-Typ, wobei die Feldbusstationen (2a, 2b, 16) ausgelegt sind zum Übertragen der Feldbussignale über ein Profibus-Medium (3a, 3b), das eine erste Impedanz (R1) aufweist,
wobei
mindestens ein Teil der Übertragung der Feldbussignale durchgeführt wird über ein Ethernet-Übertragungsmedium (5a, 5b, 6), das eine zweite Impedanz (R2) aufweist, die unterschiedlich ist von der ersten Impedanz (R1) und wobei die Feldbussignale übertragen werden über einen Snap-in-Ethernet-Anschluss (5a, 5b).

2. Verfahren nach Anspruch 1, wobei mindestens ein Verbindungspunkt (4a, 4b) des Feldbussystems (1), ein Balun (7a, 7b), der angeordnet ist zum Durchführen einer Impedanzanpassung zwischen der ersten und der zweiten Impedanz (R1, R2).

3. Verfahren nach Anspruch 1, wobei die Feldbussignale übertragen werden über ein Ethernet-Kabel (6).

4. Verfahren nach Anspruch 1, wobei die Feldbussignale übertragen werden über ein Ethernet-Netzwerk.

5. Verfahren nach Anspruch 1, wobei mindestens eine der Feldbusstationen (2a, 2b) ausgewählt wird aus der Gruppe bestehend aus: einer Master-Station (16) und einer Slave-Station (2a, 2b) des Feldbussystems (1).

6. Verfahren nach Anspruch 1, wobei mindestens eine Feldbusstation (2a, 2b) ausgelegt ist zum Durchführen einer Verstärkung des RF-Signals (11).

7. Feldbussystem (1) gemäß dem Prozessfeldbus, Profibus-Typ, umfassend mindestens zwei Feldbusstationen (2a, 2b, 16), die ausgelegt sind zum Übertragen von Feldbussignalen über ein Profibus-Medium (3a, 3b), das eine erste Impedanz (R1) aufweist, wobei mindestens ein Teil der Verbindung (15a bis 15c) zwischen den Feldbusstationen (2a, 2b, 16) zum Übertragen der Feldbussignale implementiert ist über ein Ethernet-Medium (5a, 5b, 6), das eine zweite Impedanz (R2) aufweist, die unterschiedlich ist von der ersten Impedanz (R1), und wobei das Ethernet-Medium (5a, 5b, 6) einen Snap-in-Ethernet-Anschluss (5a, 5b) umfasst.

8. Feldbussystem nach Anspruch 7, weiterhin umfassend mindestens ein Balun (7a, 7b), der angeordnet ist an einem Verbindungspunkt (4a, 4b) des Feldbussystems (1), wobei der Balun (7a, 7b) ausgelegt ist zum Durchführen einer Impedanzanpassung zwischen der ersten und der zweiten Impedanz (R1, R2).

9. Feldbussystem nach Anspruch 7, wobei das Ethernet-Medium (5a, 5b, 6) ein Ethernet-Kabel (6) umfasst.

10. Feldbussystem nach Anspruch 7, wobei das Ethernet-Medium ein Ethernet-Netzwerk ist.

11. Feldbussystem nach Anspruch 7, wobei eine der Feldbusstationen eine Master-Station (16) ist, die angeschlossen ist an mindestens eine Feldbusstation, die als Slave-Station (2a, 2b) fungiert.

12. Feldbussystem (1) nach Anspruch 7, wobei mindestens eine der Feldbusstationen (2a, 2b) eine RF-Kommunikationseinheit ist, insbesondere ein RF-Verstärker.

13. Drahtloses Kommunikationsnetzwerk (10), umfassend mindestens ein Feldbussystem nach Anspruch 7.

## Revendications

1. Procédé pour transmettre des signaux de bus de terrain entre au moins deux stations de bus de terrain (2a, 2b, 16) d'un système de bus de terrain (1), du type Bus de Terrain de Processus, Profibus, dans lequel
les stations de bus de terrain (2a, 2b, 16) sont adaptées pour transmettre les signaux de bus de terrain sur un support Profibus (3a, 3b) ayant une première impédance (R1),
dans lequel
au moins une partie de la transmission des signaux de bus de terrain est effectuée sur un support de transmission Ethernet (5a, 5b, 6) ayant une seconde impédance (R2) qui est différente de la première impédance (R1),
et les signaux de bus de terrain sont transmis sur un connecteur Ethernet à encliquetage (5a, 5b).

2. Procédé selon la revendication 1, dans lequel dans au moins un point de connexion (4a, 4b) du système de bus de terrain (1), un balun (7a, 7b) est agencé pour effectuer une adaptation d'impédance entre la première et la seconde impédance (R1, R2).

3. Procédé selon la revendication 1, dans lequel les signaux de bus de terrain sont transmis sur un câble Ethernet (6).

4. Procédé selon la revendication 1, dans lequel les signaux de bus de terrain sont transmis sur un réseau Ethernet.

5. Procédé selon la revendication 1, dans lequel au moins une des stations de bus de terrain (2a, 2b) est choisie dans le groupe constitué de : une station maîtresse (16) et une station esclave (2a, 2b) du système de bus de terrain (1).

6. Procédé selon la revendication 1, dans lequel au moins une station de bus de terrain (2a, 2b) est adaptée pour effectuer l'amplification d'un signal RF (11).

7. Système de bus de terrain (1) selon le type Bus de Terrain de Processus, Profibus, comprenant au moins deux stations de bus de terrain (2a, 2b, 16) qui sont adaptées pour transmettre des signaux de bus de terrain sur un support Profibus (3a, 3b) ayant une première impédance (R1),
dans lequel au moins une partie de la connexion (15a à 15c) entre les stations de bus de terrain (2a, 2b, 16) pour transmettre les signaux de bus de terrain est mise en oeuvre par un support Ethernet (5a, 5b, 6) ayant une seconde impédance (R2) qui est différente de la première impédance (R1), et dans lequel le support Ethernet (5a, 5b, 6) comprend un connecteur Ethernet à encliquetage (5a, 5b).

8. Système de bus de terrain selon la revendication 7, comprenant en outre au moins un balun (7a, 7b) agencé au niveau d'un point de connexion (4a, 4b) du système de bus de terrain (1), le balun (7a, 7b) étant adapté pour effectuer une adaptation d'impédance entre la première et la seconde impédance (R1, R2).

9. Système de bus de terrain selon la revendication 7, dans lequel le support Ethernet (5a, 5b, 6) comprend au moins un câble Ethernet (6).

10. Système de bus de terrain selon la revendication 7, dans lequel le support Ethernet est un réseau Ethernet.

11. Système de bus de terrain selon la revendication 7, dans lequel une des stations de bus de terrain est une station maîtresse (16), qui est connectée à au moins une station de bus de terrain servant de station esclave (2a, 2b).

12. Système de bus de terrain (1) selon la revendication 7, dans lequel au moins une des stations de bus de terrain (2a, 2b) est une unité de communications RF, en particulier un amplificateur RF.

13. Réseau de communications sans fil (10) comprenant au moins un système de bus de terrain selon la revendication 7.
